# EUROPEAN PATENT SPECIFICATION

(11) **EP 2 132 990 B1**
(45) Date of publication and mention of the grant of the patent: **24.08.2011**
(21) Application number: 09165667.8
(22) Date of filing: 14.11.2003
(51) Int. Cl.: A21D 2/24, A21D 2/26, A23L 1/227, A23L 1/23

(54) **Formulation for enhancing the flavour metabolism of yeast and bacteria in sponge, dough, brew and sourdough fermentation systems**
Formulierung zur Erhöhung des Aromas-Stoffwechsels von Hefe und Bakterien in Vorteig, Teig, Bräu und Sauerteig Fermentationssysteme
Formulation destinée à améliorer le métabolisme des saveurs de levures et bactéries dans les systèmes de fermentation à pré-pâte, pâte, à brassin et à levain

(30) Priority: 14.11.2002 US 426289 P
(43) Date of publication of application: 16.12.2009
(62) Divisional of application: 03776681.3
(73) Proprietor: PURATOS N.V., 1702 Groot-Bijgaarden (BE)
(72) Inventor: Capelle, Stefan, B-1702, GROOT-BIJGAARDEN (BE); Tossut, Pierre, Patrick, Aldo, B-4350, REMICOURT (BE)
(74) Representative: pronovem

(56) References cited:
- US-A- 2 920 965
- US-A- 3 547 659
- PATENT ABSTRACTS OF JAPAN vol. 1999, no. 03, 31 March 1999 (1999-03-31) & JP 10 327751 A (SNOW BRAND MILK PROD CO LTD), 15 December 1998 (1998-12-15) -& DATABASE WPI Section Ch, Week 199909 Thomson Scientific, London, GB; Class D13, AN 1999-098974 XP002271347 & JP 10 327751 A (SNOW BRAND MILK PROD CO LTD) 15 December 1998 (1998-12-15)
- PATENT ABSTRACTS OF JAPAN vol. 016, no. 164 (C-0931), 21 April 1992 (1992-04-21) & JP 04 011893 A (KYOWA HAKKO KOGYO CO LTD), 16 January 1992 (1992-01-16) -& DATABASE WPI Section Ch, Week 199209 Thomson Scientific, London, GB; Class B05, AN 1992-068587 XP002271348 & JP 04 011893 A (KYOWA HAKKO KOGYO KK) 16 January 1992 (1992-01-16)
- PATENT ABSTRACTS OF JAPAN vol. 1996, no. 05, 31 May 1996 (1996-05-31) & JP 08 009936 A (KAGOME CO LTD), 16 January 1996 (1996-01-16) -& DATABASE WPI Section Ch, Week 199612 Thomson Scientific, London, GB; Class D13, AN 1996-110240 XP002271349 & JP 08 009936 A (KAGOME KK) 16 January 1996 (1996-01-16)

## Description

### Field of the invention

This invention relates to an ingredient formulation enhancing the flavor metabolism of yeast and bacteria in long fermentation systems and to the use of such formulations to enhance flavor metabolism.

### Background of the invention

More and more, industrial bakeries are reintroducing traditional fermentation systems to prepare the bread using pre-dough systems such as sponge and dough, sourdough and brew systems. The role of those systems is to improve dough rheological properties as well as the flavor profile of the final bread. Hereby one wants to keep the dosage to a strict minimum avoiding huge investments.

Against this background, novel ingredient formulations have been developed to increase the flavor of such a pre-dough system by adding special ingredients boosting the flavor metabolism in yeast. This enables the baker to reduce the dosage of the pre-dough without loosing the traditional strong flavor and still improving the dough rheology and bread structure properties. An important advantage as well, is the fact that the baker can easily differentiate the flavor of his bread, much easier and effectively than by changing a yeast strain or a bacterial strain.

### Summary of the invention

The present invention relates to ingredient formulations that comprise a blend of free amino acids, comprising at least one amino acid selected from the group consisting of Leucine, Valine, Iso-leucine and Phenylalanine, preferably at least Phenylalanine, preferably at least two or three of the above-mentioned amino acids and most preferably all of the amino acids Leucine, Valine, Isoleucine and Phenylalanine, to enhance flavor metabolism of yeast and/or bacteria in long fermentation systems, and to the use of these formulations in for instance winery or brew systems, pre-dough systems (such as sponge and dough) or sourdough systems (fresh or dried) and/or raw materials used in bakery or other fermentation systems such as flour, malt extract, wheat germs or other germs, a fermentable carbon source, bran, malt, ... The role of these ingredient formulations is to improve rheological properties and/or to enhance the flavor profile. The term "fermentation system" in the present context refers to processes or production processes based on fermentation.

The ingredients used in the formulations of the invention contain typical precursors of the yeast flavor metabolism, producing the aromatic compounds found in pre-doughs. The final bakery product contains high concentrations of higher alcohols, esters, aldehydes and other aromatic compounds, resulting in significantly stronger overall flavor compared to the reference product.

The composition contains a nitrogen source which enhances the flavor metabolism of yeast and which is at the same time converted by the yeast into aromatic compounds. The nitrogen source can be a specific blend of purified amino acids, or can be a protein hydrolysate containing at least one of the above-mentioned amino acids. The blend is possibly combined with specific enzymes such as protease, transaminase, carboxylase, dehydrogenase, esterase and others, in such a way that the yeast can easily convert the substrate into flavors.

The origin of the nitrogen source can be very broad. It can for instance contain vegetable proteins, animal proteins, or protein from micro-organisms. Typical protein sources include: gluten, soy protein, yeast protein, vegetable protein, or can be any other protein source.

Improved performance of this substrate can be obtained by adding a carbon source.

The above formulations can either be used in a sponge and dough system, in a brew or winery process or in a sourdough process.

The amino acid blend of the invention can be used to intensify and/or to diversify flavors or a flavor profile in a fermentation product such as a bakery product, wine, beer, ....

Other stimulators of the flavor metabolism, other flavor enhancers and/or yeast, for instance baker yeast, can be added to the ingredient formulations of the invention. These may include sugars, fatty acids or peptides and/or yeast extract with high nucleotide content.

It is for the first time that a specific nitrogen source, in the present case a mixture of at least one of Leucine, Valine, Iso-Leucine and/or Phenylalanine as described above, is added to a pre-dough system to boost the flavor metabolism of the micro-organisms in the system. The specificity of the ingredients assures a typical yeasty and fruity flavor.

The ingredient formulation or composition according to the present invention can be easily applied in fresh sponge and dough fermentation or fresh sourdough fermentation, but it can also be used to referment dried sourdoughs with yeast, creating in short term high amounts of aromatic compounds, which were lost by drying. It allows achieving the real sourdough flavor with a stable acidity incorporated by the powder avoiding the risks linked to a real sourdough fermentation.

If a fresh sourdough is made, it normally contains yeast and/or a heterofermentative lactic acid strain which can bioconvert the nitrogen source. The aroma improvement mixture will enhance the flavor metabolism of the sourdough micro-organisms. The combination of these nitrogen sources with dried sourdoughs, adding flour, yeast, water and the nitrogen source in a pre-dough (sponge), can lead to a sourdough sponge combining the sourdough acidity with a strong flavor. The described precursors can be added to any other raw material used in bakery such as flours, malts, extracts, wheat germs, ...

The ingredient formulation according to the present invention can be added in ratios of the free amino acids as preferred by the end user. They are nevertheless added in an amount sufficient to obtain the desired result, which may be at least 0.001 % (on total flour) in the final product, preferably at least 0.05 % (on total flour) in the final product.

Preferred dosages for the amino acid blend in bakery products are for instance about 0.05%, or more preferably about 0.0375% on total flour.

In an embodiment according to the invention, the amino acids are used in the following ratio (relative amount of one amino acid compared to the others):
Leucine: 0 to 6, preferably 0 to 4 and more preferably 2; Valine: 0 to 5, preferably 0 to 3 and more preferably 0.6; Iso-Leucine: 0 to 5, preferably 0 to 3 and more preferably 0.5; Phenylalanine 0 to 5, preferably 0 to 3 and more preferably 0.5. A preferred amino acid ratio Leucine/Valine/Iso-Leucine/Phenylalanine is thus 2/0.6/0.5/0.5.

The amino acid blend according to the present invention may consist of pure amino acids and/or the blend may be obtained through hydrolyisis of a protein, whereby the protein hydrolysate should preferably at least contain free Phenylalanine. The protein used hereby may be of vegetal, animal and/or microbial origin.

To produce different kinds of flavor profiles by the yeast, the free amino acids of the invention can be supplemented to a protein hydrolysate. The addition of free amino acids to the protein hydrolysate will allow easy flavor differentiation. This protein hydrolysate is preferably used at about 0.1% on total flour, and preferably added in the pre-dough fermentation.

The present invention further relates to bakery products, winery, brewery products or other fermentation products with enhanced, intensified and/or diversified flavor profile obtained or obtainable via a method according to the present invention.

The present invention also relates to combinations of the amino acid blend, a yeast and possibly a sourdough. The combination of the amino acid blend and a yeast (produced e.g. by co-extrusion or produced by dry blending), also referred to as a sponge yeast, advantageously can be stored for about 2 years in the dry state. To achieve the optimal stability of this blend, the amino acids and the sourdough should have a dry matter content of 90%, preferably higher then 95% and optimally higher then 96% to avoid migration of residual water towards the dry yeast and as such decrease the fermentative activity of the yeast. The invention also relates to dry amino acid blends for storage (e.g. vacuum packed) with a dry matter content of at least 90%, preferably higher then 95% and optimally higher then 96%.

### Detailed description of the invention

The following examples are intended for illustration purposes only, and should not be construed as limiting the scope of the invention in any way.

### Examples

### Example 1: Composition of the amino acid blend

There are different ways to enhance the flavor metabolism in yeast. The first way is to provide the yeast with a blend of free amino acids, a nitrogen source immediately available for the yeast. To have a typical yeasty flavor in the final product, like in a sponge fermentation, a blend of 4 amino acids can be used, namely leucine, valine, iso-leucine and phenylalanine.

The optimal ratio being for instance:

| | | |
|---|---|---|
| Leucine | 0 to 4 | (advised 2) |
| Valine | 0 to 3 | (advised 0.6) |
| Iso-leucine | 0 to 3 | (advised 0.5) |
| Phenylalanine | 0 to 3 | (advised 0.5) |

with at least one of these amino acids present in the amino acid blend.

To change the final flavor of the bread, the ratio between the amino acids can be changed. If the amount of phenylalanine is increased, a typical rose-like flavor will be generated.

Of course, other amino acids can be added to make the final flavor more complex or amino acids can be left out to avoid some flavor characteristics.

### Example 2: Application in bakery products

Sponge and dough fermentation in bakery is a typical yeast fermentation. The conditions used for the fermentation differs from baker to baker. Since the production of this sponge is a labor intensive process, bakers tend to optimize the usage level to keep a good balance between functionality and economic constrains. A typical dosage would be 15% of sponge on the total flour in the recipe. However, at this dosage, the flavor is hardly perceivable and bakers are looking for ways to increase the intensity of the flavor.

With the free amino acid blend according to the present invention, the flavor metabolism can be boosted in such a way that even at 15% of sponge the flavor is clearly remarkable.

According to an embodiment of the invention, the dosage of the blend of amino acids is between about 0.001% and about 0.05% on total flour, more preferably between about 0.01% and about 0.05% on total flour. According to a preferred embodiment of the present invention, the preferred dosage of the blend of amino acids is about 0.0375% on total flour. This total amount should be added to the sponge in order to produce the flavors during the pre-fermentation.

### Example 3: Use in other applications

A lot of bakery fermentations are performed with yeast of varying origin. The examples given below serve to illustrate that the free amino acid blend of the invention can be applied independently of the yeast origin.

### Sourdough fermentation

In every sourdough, due to the presence of either wild yeast in the flour or of yeast added to the fermentation, the flavor metabolism can be enhanced with the formulations comprising an amino acid blend according to the present invention. To have optimal results, baker yeast can always be added. For a fermentation only lasting for 6H, about 1% of yeast can for instance be added on top of flour used. For a fermentation during about 20h, only about 0.1% of yeast would have to be added.

### Sake-dane

Sake-dane is a typical Japanese fermentation used in bread making. Rice is fermented by yeast and then integrated in a long baking process. The developed formulation can be used either to intensify or to diversify the flavor notes.

### Example 4: Production of the nitrogen source by hydrolysation of a protein

Protein hydrolysates can be used as nitrogen source to enhance a pre-ferment flavor. Typical protein sources include: gluten, soy protein, yeast protein, vegetable protein, or can be any other protein source.

The hydrolysis of a protein can be done as follows:

| | |
|---|---|
| Water | 75 |
| Protein | 25 |
| Endo-protease, such as Alcalase^{®} | 0.25 (Novozymes) |
| Exo-protease, such as Flavourzyme^{®} | 0.25 (Novozymes) |

Optimally, the hydrolysis is realized during 20H at 60°C at pH 8.

The reaction can be stopped by heating at 80°C during 30 minutes.

The liquid can then be spray dried (or freeze dried, drum dried, ...) at inlet temperature of about 180°C and outlet of about 90°C. A fine powder will be obtained.

This hydrolysate is preferably used at about 0.1% on total flour, and preferably added in the pre-dough fermentation.

Again, to produce different kinds of flavor profiles by the yeast, the free amino acids can be supplemented to the protein hydrolysate. The addition of free amino acids to the protein hydrolysate allows easy flavor differentiation.

### Example 5: Other formulations to enhance the flavor of the yeast fermentation

Commercial available dried sourdoughs are used in a no-time dough system. Due to the drying of the sourdough, independent of the drying process used, most of the volatile flavors produced by the yeast in the sourdough fermentation are lost. The resulting bread, baked with a dried sourdough shows a rich sourdough taste, but sometimes it lacks the typical yeasty notes from a fresh sourdough.

The production of a fresh sourdough in the bakery is often not convenient (risk of fluctuations and contaminations, labor cost, ...) and it takes a lot of time for the sour fermentation. Fermentation temperature and starter culture should be controlled to obtain a regular acidification. Therefore, a (re)-fermentation with yeast is easier and it only takes a short time.

A dried sourdough blended with a mixture of amino acids and/or protein hydrolysate, added together to flour and water can be shortly fermented by yeast to achieve: controlled sourdough taste, standardized bread acidity level and fresh yeast flavor.

### Example 6: Combinations with other raw materials

In fact, the free amino acid blend of the present invention can be combined with a lot of other raw materials used in fermentations such as a fermentable carbon source, bran, germs, malt, ...

Since those raw materials are enhancing growth of the yeast, of course with the more biomass produced, the flavor metabolism will be boosted accordingly.

### Example 7: Use in a direct dough method

The composition or amino acid blend according to the invention can be used in a direct method, where still long bulk fermentations are used. The fermentation normally last between about 2 and 6H and the formulation should be added accordingly to avoid overdosage and risk of off-flavor production due to Maillard reactions with the remaining free amino acids.

### Example 8: Direct use of the amino acid blend in pre-dough fermentation

### Step 1: preparation of the sponge

The sponge is prepared according to the following recipe:

| | |
|---|---|
| Flour: | 100 kg |
| Water: | 60 l |
| Yeast: | 1 kg |
| Amino acid blend: | 0.240 kg |
| Sugar: | 1 kg |

The amino acid blend is composed of 133 g of leucine; 40 g of valine; 33.5 g iso-leucine and 33.5 g of phenylalanine.

The whole is mixed in a normal spiral mixer until a dough is obtained. The dough is then fermented for about 6h at about 25°C.

### Step 2: Final recipe

The sponge step 1 is dosed at 25 % on the flour. The final recipe is then:

| | |
|---|---|
| Flour | 100 kg |
| Sponge | 25 kg |
| Yeast | 1 kg |
| Water | 60 l |
| Salt | 2 kg |

This means that on the final dough, the precursor composition of the invention has been added at about 0.0375% on the flour. A strong yeast and fruity flavor will be remarkable in the baked bread.

The whole is mixed with a Spiral mixer for about 2 minutes in first speed, and for about 5 minutes in second speed, followed by bulk fermentation for about 30 minutes, molding, proofing for about 60 minutes at about 25°C and finally baking for about 35 minutes at about 230°C.

### Example 9: The combination with a dried sourdough

The same pre-dough can be repeated adding a dried sourdough to the sponge and dough fermentation.

### Step 1: Preparation of the sponge and dough

The following recipe is used:

| | |
|---|---|
| Flour | 100 kg |
| Water | 100 kg |
| Amino Acid blend | 0.375 kg |
| Traviata ^{®} | 20 kg |
| Yeast | 0.5 kg |

The fermentation takes 12 h at normal bakery conditions.

Traviata ^{®} (Puratos NV, BELGIUM) is a spray dried sourdough with an acidity of 80 ml 0.1 N NaOH/10g of product and it generates a typical rye sourdough taste if it is used as such.

### Step 2: Final dough

For the final dough, the following recipe is used:

| | |
|---|---|
| Flour | 100 kg |
| Sponge | 20 kg |
| Water | 60 l |
| Yeast | 1 kg |
| Salt | 2 kg |

The whole is mixed with a Spiral mixer for about 2 minutes in first speed, and for about 5 minutes in second speed, followed by bulk fermentation for about 30 minutes, molding, proofing for about 60 minutes at about 25°C and finally baking for about 35 minutes at about 230°C.

Using this method, a very complete flavor is generated in an easy fermentation system.

The acidity is assured by the dried sourdough without risks of fluctuations, the sourdough taste is also present due to the dried sourdough and on top of that, the fresh flavor notes are produced in high concentrations due to the addition of the precursor composition (the amino acid blend or protein hydrolysate containing same) and the yeast fermentation.

### Example 10: Rye bread production

For rye bread production, a sourdough is needed to have good baking properties of the rye flour. Normally, a fresh sourdough will be used to acidify the flour. Wheat flour can be incorporated in more or less extend.

A typical recipe for a 100 % rye bread could be as follows:

### Step 1: sourdough fermentation

For the sourdough:

| | |
|---|---|
| Rye flour | 100 kg |
| Water | 90 l |
| Panistart R01 ^{®} | 0.250 kg |
| Protein hydrolysate | 0.400 kg |
| Amino acid blend | 0.120 kg |

The dough is mixed and left for fermentation during 24h at 30°C.

Panistart R01 ^{®} (Puratos NV) is a freeze dried starter culture for rye sourdough fermentation. It contains a blend of homofermentative, heterofermentative lactic acid bacteria as well as yeast.

### Step 2: Final dough

A very strong flavored sourdough is obtained as follows:

| | |
|---|---|
| Rye flour | 100 kg |
| Rye sourdough | 33 kg |
| Water | 90 l |
| Yeast | 2 kg |
| Salt | 2.3 kg |

The whole is mixed (DIOSNA S64) for about 4 minutes at first speed and for about 3 minutes at second speed, followed by bulk fermentation for about 20 minutes, molding, final proofing for about 60 minutes at about 35°C and then baking for about 10 minutes at about 260°C and then about 60 minutes at about 210°C.

A very flavorful rye bread is obtained.

If no fresh sourdough is required, a comparable flavor can be obtained doing the following sponge:

| | |
|---|---|
| Rye flour | 90 kg |
| Orfeo ^{®} | 10 kg |
| Amino acid blend | 0.200 kg |
| Water | 90 l |
| Yeast | 3 kg |

This sponge is fermented overnight at 25°C.

Orfeo ^{®} (Puratos NV, BELGIUM) is a dried rye sourdough of 200 degrees of acidity

### Example 11: Milk bread; brioche; Panettone

A first sourdough is prepared as follows:

| | |
|---|---|
| Wheat flour | 50 kg |
| Maize flour | 50 kg |
| Panistart W01 ^{®} | 0.250 kg |
| Amino acid blend | 0.150 kg |
| Yeast | 0.100 kg |
| Water | 100 l |

This sourdough is fermented for 24h at 30°C

A mild sourdough with strong yeast aroma is obtained.

This sourdough can than be added at 33% on the flour in the final sourdough.

Panistart W01 ^{®} (Puratos NV, BELGIUM) is a freeze dried starter culture to produce wheat sourdough.

In the sourdough, other raw material such as wheat germs, malt flour, malt extract can be added to differentiate the flavor of the final baked bread.

### Example 12: Method to enhance sponge flavor in typical American style sponge bread

The stabilized combination of yeast and the sponge flavor boosting blend were prepared as follows:

| | |
|---|---|
| Yeast (dry matter) : | 100 kg |
| Amino acid blend: | 24 kg |
| (to boost the flavor metabolism of the yeast) : | |
| Sourdough (dry matter): | 76 kg |

Fresh yeast with a dry matter of 25-33% can be used.

The amino acid blend, used to boost the flavor metabolism in yeast, as described in example 1, is added to the yeast, as well as a sourdough product, which can be in dried, liquid or paste form.

This mixture is then extruded and dried as is done in a normal way to produce instant dry yeast to obtain a dry matter content higher then 90%, preferably higher then 95% and optimally higher then 96%.

For optimal conservation, this yeast can be packed under vacuum conditions in commonly used aluminum based packaging.

An alternative to this is of course to pack directly the dry blend described below, into the aluminum based packaging under vacuum conditions. Here a normal instant yeast, with dry matter higher then 90%, preferably higher then 95% and optimally higher then 96%, the dry amino acid blend and a dry sourdough can be used.

To achieve the optimal stability of this blend, the amino acids and the sourdough should have a dry matter content of 90%, preferably higher then 95% and optimally higher then 96% to avoid migration of residual water towards the dry yeast and as such decrease the fermentative activity of the yeast.

Other combinations/concentrations can be used as well.

This combined product (produced e.g. by co-extrusion or produced by blending) is called sponge yeast in the example.

This combined product can then be added to the sponge instead of a regular yeast in a typical US sponge bread (see recipe below).

A typical US sponge bread can be prepared as follows with the following ingredients:

### Step 1: Preparation of the sponge

| | |
|---|---|
| Wheat flour: | 2100 grams |
| Water: | 1200 grams |
| Sponge yeast: | 42 grams |
| Oil: | 75 grams |

The sponge ingredients were mixed for about 1 minutes at first speed and for about 4 minutes at second speed. The sponge is then fermented for 4 h at 25°C.

### Step 2: Preparation of the dough

| | |
|---|---|
| Wheat flour: | 900 grams |
| Water: | 330 grams |
| Yeast: | 0 grams |
| Rapeseed oil: | 0 grams |
| Improver: | 30 grams |
| Salt: | 67.5 grams |
| Liquid sugar: | 300 grams |
| Ca propionate: | 9 grams |

The dough was proofed for about 80 minutes and scored as follows:

| | |
|---|---|
| Dough feeling: | Supple |
| Crumb color: | Slightly white |
| Crumb structure: | Slightly fine |
| Flavor: | Typical strong sponge |

Table 1 gives an overview of the conditions maintained and the parameters set during the preparation of a typical US sponge bread.

**Table 1**

| | T (°C) | Time (min) | Weight | RH | Equipment |
|---|---|---|---|---|---|
| Bakery | 25 | | | | |
| Flour | 25 | | | | |
| Water | 3 | | | | |
| Mixing | 25 | 2' + 5' | | | Diosna SP24 |
| Dough T° | 28 | | | | |
| Piece fermentation | 25 | 20' | 525g | | open pan |
| Sheeter | 25 | | | | Bertrand: R8/L19 |
| Proofing time | 35 | 45' | | 95% | Koma |
| Baking open pan | 210 | 35' | | | Miwe, without steam |

| | | | | | |
|---|---|---|---|---|---|
| RH: relative humidity | | | | | |

A very strong, though typical sponge flavor was build up during the fermentation compared to the same sponge made with regular yeast.

The typical flavor of Ca-propionate was strongly masked by the increased production of sponge flavor by this sponge yeast.

The sponge yeast can be stored during 2 years without loss of activity, which is comparable to regular bakers yeast. Both sponge yeast produced by co-extrusion and by dry blending could be maintained as such.

The present invention relates to a method to increase the flavor metabolism of yeast and/or bacteria in long fermentation systems, which comprises the steps of adding a sufficiently effective amount of a an ingredient formulation comprising a free amino acid blend to a fermentation system, said amino acid blend comprising at least one amino acid selected from the group consisting of Leucine, Valine, Iso-Leucine and Phenylalanine.

The method of paragraph [092] wherein the amino acid blend comprises at least Phenylanine.

The method of paragraph [092], wherein the amino acid blend comprises at least Leucine, Valine, Iso-Leucine and Phenylalanine.

The method of any of paragraphs [092] to [094], wherein the amino acid ratio of said blend is: Leucine: 0 to 4; Valine: 0 to 3; Iso-Leucine: 0 to 3; and Phenylalanine 0 to 3.

The method of paragraph [095], wherein the amino acid ratio of said blend is: Leucine: 2; Valine: 0.6; Iso-Leucine: 0.5; and Phenylalanine 0.5.

The method of any of paragraphs [092] to [096], wherein the dosage of the blend of amino acids is at least 0.001 %, preferably at least 0.05 % (on total flour) in the final product.

The method of any of paragraphs [092] to [097], wherein the dosage of the blend of amino acids is about 0.0375% on total flour of a bakery product.

The method of paragraph [092], wherein the amino acid blend is added to a pre-dough system or a sourdough system.

The method of paragraph [0094], wherein the sourdough is a fresh or a dried sourdough.

The method of any of paragraphs [092] to [0100], wherein the amino acid blend is obtained from a protein hydrolysate.

The method of any of paragraphs [092] to [0101], wherein the amino acid blend is added to raw materials used in fermentation systems such as flour, malt extract, wheat or other germs, a fermentable carbon source, bran or malt.

The method of any of paragraphs [092] to [0102], which further comprises the step of adding other enhancers of the flavor metabolism, other flavor enhancers and/or yeast.

The method of any of paragraphs [092] to [0103], which further comprises the step of adding a carbon source.

The method of any of paragraphs [092] to [0104], which further comprises the step of adding specific enzymes such as protease, transaminase, carboxylase, dehydrogenase, esterase.

The method of any of paragraphs [092] to [0105], which further comprises the step of adding a protein hydrolysate.

A fermentation product obtainable via any of the preceding methods of any of paragraphs [092] to [0106].

An ingredient formulation comprising a free amino acid blend to a fermentation system, said amino acid blend comprising at least one amino acid selected from the group consisting of Leucine, Valine, Iso-Leucine and Phenylalanine.

The ingredient formulation of paragraph [0108], wherein the amino acid blend comprises at least Phenylanine.

The ingredient formulation of paragraph [0108], wherein the amino acid blend comprises at least Leucine, Valine, Iso-Leucine and Phenylalanine.

The ingredient formulation of any of paragraphs [0108] to [0110], wherein the amino acid ratio of said blend is: Leucine: 0 to 4; Valine: 0 to 3; Iso-Leucine: 0 to 3; and Phenylalanine 0 to 3.

The ingredient formulation of paragraph [0111], wherein the amino acid ratio of said blend is: Leucine: 2; Valine: 0.6; Iso-Leucine: 0.5; and Phenylalanine 0.5.

A dry ingredient formulation of any of paragraphs [0108] to [0112], with a dry matter content of at least 90%.

A combination of the ingredient formulation of any of paragraphs [0108] to [0112] with yeast and possibly a sourdough.

The combination of paragraph [0114], wherein the combination has a dry matter content of at least 90%.

The combination of paragraph [0114] or [0115], produced by co-extrusion or dry blending.

The ingredient formulation of paragraph [0113] or the combination of any of paragraphs [0114] to [0116] which is vacuum packed.

## Claims

1. A method for increasing the flavor metabolism of yeast and/or bacteria comprising the step of adding to yeast and/or bacteria, at least one amino acid selected from the group consisting of Leucine, Valine, Iso-Leucine and Phenylalanine.

2. The method of claim 1, wherein said at least one amino acid is Phenylalanine.

3. The method of claim 1, wherein said amino acids are Leucine, Valine, Iso-Leucine, and Phenylalanine.

4. The method according to any of claims 1 to 3, wherein the amino acid ratio of said blend is:
- Leucine: 0 to 6; preferably 0 to 4, more preferably 2;
- Valine: 0 to 5; preferably 0 to 3, more preferably 0.6;
- Iso-Leucine: 0 to 5; preferably 0 to 3, more preferably 0.5; and
- Phenylalanine 0 to 5, preferably 0 to 3, more preferably 0.5.

5. The method according to any of claims 1 to 4, wherein said amino acid(s) is/are purified amino acid(s) or free amino acids of a protein hydrolysate, said protein hydrolysate being, preferably, gluten hydrolysate, soy protein hydrolysate, yeast protein hydrolysate, or vegetable protein hydrolysate.

6. The method according to any of claims 1 to 5, further comprising the step of adding a protein hydrolysate.

7. The method according to any of claims 1 to 6, wherein the yeast is provided in a dough, a sponge or a sourdough, preferably in a fresh or a dried sourdough.

8. The method according to claim 7, wherein said dough, sponge or sourdough comprises flour, malt extract, wheat or other germs, a fermentable carbon source, bran or malt.

9. The method according to any of claims 1 to 8, further comprising the step of adding specific enzymes such as protease, transaminase, carboxylase, dehydrogenase, esterase.

10. The method according to any of claims 7 to 9, further comprising the step of drying the resulting mixture.

11. A dried sourdough refermented with yeast in the presence of a nitrogen source, said nitrogen source comprising at least one amino acid selected from the group consisting of Leucine, Valine, Iso-Leucine and Phenylalanine.

12. The dried sourdough according to claim 11, wherein the amino acids ratio is: Leucine: 0 to 4, preferably 2; Valine: 0 to 3, preferably 0.6; Iso-Leucine 0 to 3, preferably 0.5; Phenylalanine 0 to 3, preferably 0.5.

13. The dried sourdough according to claim 11 or 12, which is produced by co-extrusion or dry blending of the ingredients.

14. The dried sourdough according to any of claims 11 to 13, which is vacuum packed.

## Patentansprüche

1. Verfahren zum Verstärken des Aromastoffwechsels von Hefe und/oder Bakterien, welches den Schritt des Hinzufügens mindestens einer Aminosäure zu Hefe und/oder Bakterien aufweist, welche aus der Gruppe ausgewählt ist, die aus Leucin, Valin, Isoleucin und Phenylalanin besteht.

2. Verfahren nach Anspruch 1, wobei mindestens eine Aminosäure Phenylalanin ist.

3. Verfahren nach Anspruch 1, wobei die Aminosäuren Leucin, Valin, Isoleucin und Phenylalanin sind.

4. Verfahren nach einem der Ansprüche 1 bis 3, wobei das Aminosäureverhältnis des Gemisches folgenderweise ist:
- Leucin: 0 bis 6, vorzugsweise 0 bis 4, insbesondere 2;
- Valin: 0 bis 5, vorzugsweise 0 bis 3, insbesondere 0,6;
- Isoleucin: 0 bis 5, vorzugsweise 0 bis 3, insbesondere 0,5; und
- Phenylalanin: 0 bis 5, vorzugsweise 0 bis 3, insbesondere 0,5.

5. Verfahren nach einem der Ansprüche 1 bis 4, wobei die Aminosäure(n) gereinigte Aminosäure(n) oder freie Aminosäuren eines Proteinhydrolysats ist/sind, wobei das Proteinhydrolysat vorzugsweise Glutenhydrolysat, Sojaproteinhydrolysat, Hefeproteinhydrolysat oder Pflanzenproteinhydrolysat ist.

6. Verfahren nach einem der Ansprüche 1 bis 5, welches des Weiteren den Schritt des Hinzufügens eines Proteinhydrolysats aufweist.

7. Verfahren nach einem der Ansprüche 1 bis 6, wobei die Hefe in einem Teig, einem Vorteig oder einem Sauerteig, vorzugsweise in einem frischen oder in einem getrockneten Sauerteig, bereitgestellt wird.

8. Verfahren nach Anspruch 7, wobei der Teig, Vorteig oder Sauerteig Mehl, Malzextrakt, Weizenkeime oder andere, eine fermentierbare Kohlenstoffquelle, Kleie oder Malz aufweist.

9. Verfahren nach einem der Ansprüche 1 bis 8, welches des Weiteren den Schritt des Hinzufügens spezifischer Enzyme wie Protease, Transaminase, Carboxylase, Dehydrogenase, Esterase aufweist.

10. Verfahren nach einem der Ansprüche 7 bis 9, welches des Weiteren den Schritt des Trocknens des resultierenden Gemisches aufweist.

11. Getrockneter Sauerteig, der mit Hefe in Gegenwart einer Stickstoffquelle erneut fermentiert wird, wobei die Stickstoffquelle mindestens eine Aminosäure aufweist, die aus der Gruppe ausgewählt ist, welche aus Leucin, Valin, Isoleucin und Phenylalanin besteht.

12. Getrockneter Sauerteig nach Anspruch 11, wobei das Aminosäureverhältnis folgenderweise ist: Leucin 0 bis 4, vorzugsweise 2; Valin 0 bis 3, vorzugsweise 0,6; Isoleucin 0 bis 3, vorzugsweise 0,5; Phenylalanin 0 bis 3, vorzugsweise 0,5.

13. Getrockneter Sauerteig nach Anspruch 11 oder 12, der durch Coextrusion oder Trockenmischen der Inhaltsstoffe hergestellt wird.

14. Getrockneter Sauerteig nach einem der Ansprüche 11 bis 13, der vakuumverpackt ist.

## Revendications

1. Procédé pour augmenter le métabolisme des saveurs de la levure et/ou des bactéries, comprenant l'étape consistant à ajouter à de la levure et/ou à des bactéries au moins un acide aminé choisi dans le groupe comprenant la leucine, la valine, l'isoleucine et la phénylalanine.

2. Procédé selon la revendication 1, dans lequel ledit au moins un acide aminé est la phénylalanine.

3. Procédé selon la revendication 1, dans lequel lesdits acides aminés sont la leucine, la valine, l'isoleucine et la phénylalanine.

4. Procédé selon l'une quelconque des revendications 1 à 3, dans lequel le rapport des acides aminés dans ledit mélange est :
- leucine : 0 à 6 ; de préférence 0 à 4, de manière encore plus préférée 2 ;
- valine : 0 à 5 ; de préférence 0 à 3, de manière encore plus préférée 0,6 ;
- isoleucine : 0 à 5 ; de préférence 0 à 3, de manière encore plus préférée 0,5 ; et
- phénylalanine : 0 à 5 ; de préférence 0 à 3, de manière encore plus préférée 0,5.

5. Procédé selon l'une quelconque des revendications 1 à 4, dans lequel le(s)dit(s) acide(s) aminé(s) est/sont un(des) acide(s) aminé(s) purifié(s) ou des acides aminés libres d'un hydrolysat de protéine, ledit hydrolysat de protéine étant de préférence un hydrolysat de gluten, un hydrolysat de protéine de soja, un hydrolysat de protéine de levure ou un hydrolysat de protéine végétale.

6. Procédé selon l'une quelconque des revendications 1 à 5, comprenant en outre l'étape d'ajouter un hydrolysat de protéine.

7. Procédé selon l'une quelconque des revendications 1 à 6, dans lequel la levure est présente dans une pâte, une poolish ou un levain, de préférence un levain frais ou séché.

8. Procédé selon la revendication 7, dans lequel ladite pâte, ladite poolish ou ledit levain comprend de la farine, de l'extrait de malt, des germes de blé ou d'autres, une source de carbone fermentable, du son ou du malt.

9. Procédé selon l'une quelconque des revendications 1 à 8, comprenant en outre l'étape d'ajouter des enzymes spécifiques telles qu'une protéase, une transaminase, une carboxylase, une déshydrogénase, une estérase.

10. Procédé selon l'une quelconque des revendications 7 à 9, comprenant en outre l'étape de sécher le mélange résultant.

11. Levain séché refermenté avec de la levure en présence d'une source d'azote, ladite source d'azote comprenant au moins un acide aminé choisi dans le groupe comprenant la leucine, la valine, l'isoleucine et la phénylalanine.

12. Levain séché selon la revendication 11, dans lequel le rapport des acides aminés est : leucine : 0 à 4, de préférence 2 ; valine : 0 à 3, de préférence 0,6 ; isoleucine : 0 à 3, de préférence 0,5 ; phénylalanine : 0 à 3, de préférence 0,5.

13. Levain séché selon la revendication 11 ou 12, qui est produit par co-extrusion ou mélange à sec des ingrédients.

14. Levain séché selon l'une quelconque des revendications 11 à 13, qui est conditionné sous vide.
